# EUROPEAN PATENT APPLICATION

(11) **EP 3 937 101 A1**
(43) Date of publication of application: **12.01.2022**
(21) Application number: 20782067.1
(22) Date of filing: 13.03.2020
(51) Int. Cl.: G06Q 10/06

(54) **SKILL EVALUATION SYSTEM AND SKILL EVALUATION METHOD**

(30) Priority: 05.04.2019 JP 2019073064
(71) Applicant: KOBELCO CONSTRUCTION MACHINERY CO., LTD., Hiroshima-shi Hiroshima 731-5161 (JP)
(72) Inventor: SASAKI, Hitoshi, Hiroshima-shi, Hiroshima 731-5161 (JP); SAIKI, Seiji, Hiroshima-shi, Hiroshima 731-5161 (JP); YAMAZAKI, Yoichiro, Hiroshima-shi, Hiroshima 731-5161 (JP)
(74) Representative: TBK
(86) International application number: PCT/JP2020/011069
(87) International publication number: WO 2020/203171

(57) **Abstract**

A skill evaluation system includes a server including: an acquisition part which acquires actual work performance information about an actual work performance for a remote manipulation, and acquires, at least during or after the operation, event information about an efficiency influencing event which is found to influence an efficiency of the operation in the operation of the construction machine by the remote manipulation by the operator; an actual work performance database which stores the actual work performance information; an event database which stores the event information; a skill level calculation part which calculates, based on evaluation information including the actual work performance information and the event information, a skill level of the operator for the remote manipulation; and a presentation part which presents the skill level to an orderer terminal.

## Description

### Technical Field

The present invention relates to a technology of evaluating a level of a manipulation skill of an operator who manipulates a construction machine.

### Background Art

Patent Literature 1 discloses a manipulation assistive device for a working machine as a technology of evaluating a skill of an operator who manipulates a construction machine. The manipulation assistive device calculates a work performance for evaluating a work efficiency and a skill level from a state quantity of each of a work quantity, a work time, and a fuel consumption quantity in an operation or a work using the working machine. Patent Literature 1 discloses that the operator can grasp his/her own work efficiency and skill level from the work performance presented to the operator (paragraph [0011] of Patent Literature 1).

Meanwhile, technologies of remotely manipulating construction machines have been developed in recent years. A remote manipulation system is expected to allow an orderer to collect operators from all over the world. Establishment of such a remote manipulating system would allow the orderer to easily ensure sufficient operators. Moreover, each operator is not required to visit an operation site, and thus can work in such a flexible manner as to select a different operation site depending on a time range.

Here, an index for allowing the orderer to safely select an operator who meets the needs of the orderer from a plurality of operator candidates is required to effectively utilize the aforementioned advantages of the remote manipulating system. The index must be available to fairly evaluate the skill of each of the operators.

However, an actual operation to be executed by a construction machine may experience an occurrence of an event which is ungraspable by the orderer in advance of the operation and is likely to influence the efficiency of the operation. In such a case of the occurrence of the event in the operation, the manipulation assistive device in Patent Literature 1 for evaluating the skill level only from the state quantity of each of the work quantity, the work time, and the fuel consumption quantity fails to fairly evaluate the manipulation skill of the operator.

### Citation List

### Patent Literature

Patent Literature 1: Japanese Unexamined Patent Publication No. 2016-141940

### Summary of Invention

### Summary of Invention

An object of the present invention is to provide a skill evaluation system and a skill evaluation method for fairly evaluating a manipulation skill of an operator even in a case of an occurrence of an event which is ungraspable by an orderer before a start of an operation to be executed by a construction machine and is likely to influence the efficiency of the operation.

The skill evaluation system according to one aspect of the present invention relates to a skill evaluation system for evaluating a manipulation skill of an operator who remotely manipulates a construction machine. The system includes a server communicably connected to an orderer terminal which allows an orderer to place an order for an operation to be executed by the construction machine by the remote manipulation, and communicably connected to a remote manipulating device for allowing the operator to remotely manipulate the construction machine. The server includes: an acquisition part which acquires actual work performance information about an actual work performance of the operator having remotely manipulated the construction machine by using the remote manipulating device, and acquires, at least during or after the operation, event information about an efficiency influencing event which is found to influence an efficiency of the operation in the operation of the construction machine by the remote manipulation by the operator; an actual work performance database which stores the actual work performance information; an event database which stores the event information; a skill level calculation part which calculates, based on evaluation information including the actual work performance information and the event information, a skill level of the operator for the remote manipulation; and a presentation part which presents the skill level to the orderer terminal

### Brief Description of Drawings

Fig. 1 is a block diagram showing an overall configuration of a skill evaluation system according to an embodiment of the present invention.
Fig. 2 shows an overview of a remote manipulating device included in the skill evaluation system.
Fig. 3 shows specific exemplary actual work performance information stored in an actual work performance database in a server included in the skill evaluation system.
Fig. 4 shows a table of machine model information having lists of machine types, machine models, working device types, and leading end ATT types.
Fig. 5 shows a specific exemplary efficiency influencing event.
Fig. 6 is a graph schematically showing a relation between a water content rate of a ground surface and a ground surface condition.
Fig. 7 shows specific exemplary event information.
Fig. 8 shows specific exemplary operation schedule information.
Fig. 9 shows specific exemplary preliminary difficulty information.
Fig. 10 shows specific exemplary evaluation information.
Fig. 11 shows an exemplary formula for calculating a skill level.
Fig. 12 shows a specific exemplary detail screen image of an evaluation result of a manipulation skill.
Fig. 13 shows a specific exemplary rank determination table.
Fig. 14 shows a specific exemplary operator database.
Fig. 15 shows a flowchart of a process of calculating a skill level in the skill evaluation system according to the embodiment.
Fig. 16 shows a flowchart of a process of sending the skill level to the orderer terminal in the skill evaluation system according to the embodiment.

### Description of Embodiments

It should be noted that the following embodiment illustrates one example of the invention, and does not delimit the technical protection scope of the present invention.

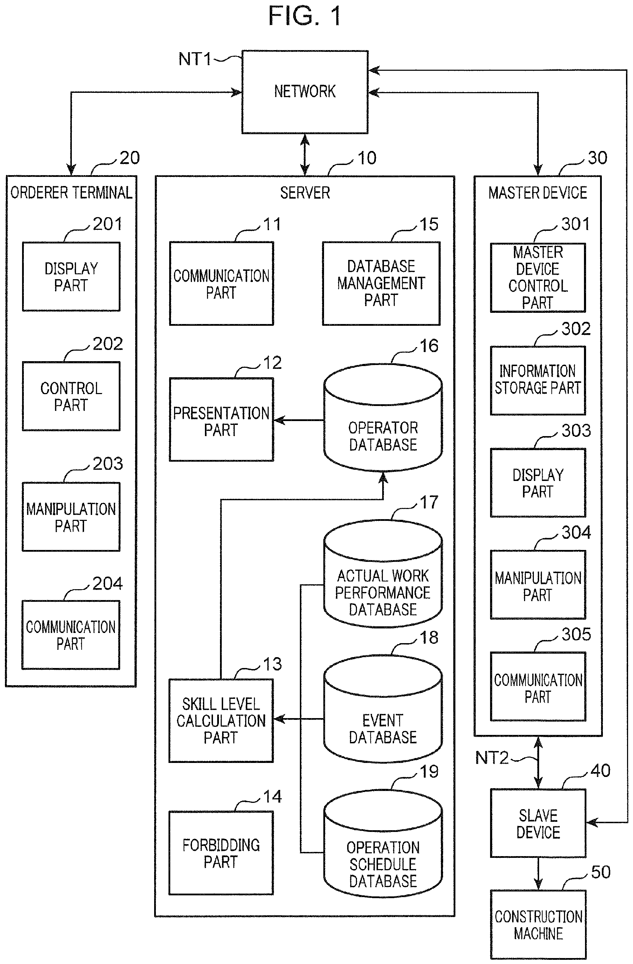

Hereinafter, a skill evaluation system and a skill evaluation method according to the embodiment of the present invention will be described. Fig. 1 is a block diagram showing an overall configuration of the skill evaluation system according to the embodiment. The skill evaluation system includes a server 10. The server 10 is connected to an orderer terminal 20, a master device 30, and a slave device 40 communicably with one another via a communication channel NT1.

The master device 30 is an exemplary remote manipulating device for remotely manipulating the construction machine 50. The server 10 is a device for evaluating a manipulation skill of an operator who manipulates the construction machine 50 by using the master device 30. The orderer terminal 20 is a device which allows an orderer to place an order to the operator for an operation to be executed by the construction machine 50 by a remote manipulation.

The slave device 40 includes a subordinate operating device arranged at an operating seat device of the construction machine 50 for handling a manipulation lever located at the operating seat device of the construction machine 50 based on a manipulative amount received by the master device 30. The slave device 40 serves as a dummy of the operator to manipulate the construction machine 50. The construction machine 50 includes a hydraulic excavator, a hydraulic crane, and the like to be remotely manipulated.

The communication channel NT1 includes a long-distance communication network formed of, for example, Internet and a mobile phone communication network. The master device 30 and the slave device 40 are communicably connected to each other via the communication channel NT2. The communication channel NT2 includes a long-distance communication network in the same manner as the communication channel NT1. Further, the communication channel NT2 may include a communication network, such as a specified low power radio, Bluetooth (registered trademark), or a wireless local area network (LAN), which enables the master device 30 and the slave device 40 to wirelessly communicate with each other at a distance of several tens to hundreds of meters therebetween. However, the communication channels merely show examples, and thus at least one of the communication channel NT1 and the communication channel NT2 may be formed of, for example, a wired communication network.

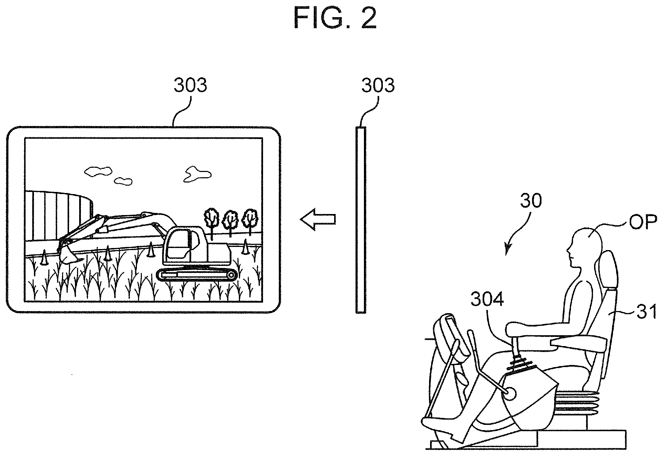

Fig. 2 shows an overview of the master device 30 included in the skill evaluation system. As shown in Figs. 1 and 2, the master device 30 includes a master device control part 301, an information storage part 302, a display part 303, a manipulation part 304, and a communication part 305.

The master device control part 301 includes, for example, a processor such as a CPU, and controls the entirety of the master device 30. Specifically, for example, the master device control part 301 acquires actual work performance information and event information, and causes the information storage part 302 to store the acquired actual work performance information and event information. The actual work performance information is information about an actual work performance of the operator having remotely manipulated the construction machine 50 by using the master device 30. The event information is information about an efficiency influencing event which is found to influence an efficiency of the operation in the operation of the construction machine 50 by the remote manipulation by the operator. In other words, the efficiency influencing event represents an event which is ungraspable by the orderer in advance of a start of the operation of the construction machine 50 and is likely to influence the efficiency of the operation.

The master device control part 301 requests the operator to input an access code for allowing the operator to remotely manipulate the construction machine 50 by using the master device 30, executes an authentication process by using the input access code, and permits the operator to execute the remote manipulation when approving the authentication. Conversely, the master device control part 301 avoids permitting the operator to execute the remote manipulation when disapproving the authentication. Here, the master device 30 and the slave device 40 store their access codes in their respective memories (not shown). The master device control part 301 sends the input access code to the slave device 40 via the communication part 305 after confirming that the input access code matches the access code stored in the memory. The slave device 40 sends a permission reply to the master device 30 after confirming that the input access code matches the access code stored in the memory. The master device control part 301 establishes a communication connection between the communication part 305 and the slave device 40 when the communication part 305 receives the permission reply. Thereafter, the master device control part 301 sends, to the slave device 40 via the communication part 305, the manipulative amount input to the manipulation part 304 by the operator at every time of the input to thereby move the slave device 40. This enables the operator to perform the operation of the construction machine 50 by manipulating the manipulation part 304 of the master device 30. The access code may be, for example, an operator ID to be described later, or a password set independently of the operator ID.

When the construction machine 50 finishes the operation, the master device control part 301 sends, to the server 10 via the communication part 305, the actual work performance information about the actual work performance of the operation and the event information.

The display part 303 includes a display device, such as a liquid crystal display, and displays a peripheral image of the construction machine 50. As shown in Fig. 2, the master device 30 further includes a seat 31 for allowing the operator to sit thereon, and the display part 303 is arranged in front of the seat 31.

The manipulation part 304 is a device for receiving a manipulation of the operator. The manipulation part 304 includes a manipulation lever similar to that provided at the operating seat device of the construction machine 50. Specifically, the manipulation part 304 includes a plurality of manipulation levers each tiltable in a front-rear direction and/or a left-right direction. When the operator tilts a certain manipulation lever, a manipulative amount corresponding to an amount the tilting is sent to the slave device 40 via the communication channel NT2 to thereby cause the slave device 40 to tilt the manipulation lever of the construction machine 50 corresponding to the manipulation lever tilted by the operator in accordance with the manipulative amount. As a result, the operator can remotely manipulate the construction machine 50 by handling the manipulation lever of the manipulation part 304 while seeing the peripheral image displayed on the display part 303.

The communication part 305 includes a communicator connecting the master device 30, and the communication channel NT1 and the communication channel NT2 to each other.

The server 10 is constituted by a computer including a processor, such as a CPU, and a communication function. As shown in Fig. 1, the server 10 includes a communication part 11 (exemplary acquisition part), a presentation part 12, a skill level calculation part 13, a forbidding part 14, a database management part 15, and databases. In the embodiment, the databases include an operator database 16, an actual work performance database 17, an event database 18, and an operation schedule database 19. The various databases shown in Fig. 1 are stored in the memory included in the server 10. Moreover, in Fig. 1, each of the presentation part 12, the skill level calculation part 13, the forbidding part 14, and the database management part 15 comes into effect when the CPU executes a corresponding program stored in the memory.

The communication part 11 includes, for example, a communicator which connects the server 10 and the communication channel NT1 to each other, and receives master device information sent from the master device 30. The master device information includes the actual work performance information about the actual work performance and the event information about the efficiency influencing event. Besides, the communication part 11 receives orderer information from the orderer terminal 20. The orderer information includes operation schedule information including a workplan information about a plan for the operation of the construction machine 50 and a query request for inquiring a skill level of a specific operator from the orderer terminal 20.

The presentation part 12 presents the skill level to the orderer terminal 20. Specifically, when the communication part 11 receives the query request from the orderer terminal 20, the presentation part 12 reads out the skill level of the corresponding operator from the operator database 16 and sends the read skill level to the orderer terminal 20 via the communication part 11. When the skill level calculation part 13 to be described later calculates the skill level, the presentation part 12 further sends the calculated skill level to the master device 30 via the communication part 11.

The skill level calculation part 13 can calculate the skill level of the operator, based on evaluation information including the workplan information included in the operation schedule information sent from the orderer terminal 20, and the actual work performance information and the event information sent from the master device 30. The calculation of the skill level will be described in detail later.

When the communication part 11 receives the master device information from the master device 30, the database management part 15 causes one of the actual work performance database 17 and the event database 18 to store the master device information. Specifically, when the received master device information indicates the actual work performance information, the database management part 15 causes the actual work performance database 17 to store the actual work performance information. When the received master device information indicates the event information, the database management part 15 causes the event database 18 to store the event information. When the communication part 11 receives the operation schedule information from the orderer terminal 20, the database management part 15 causes the operation schedule database 19 to store the operation schedule information.

The actual work performance database 17 stores respective actual work performance information of a plurality of operators entered in the server 10. Specifically, the actual work performance database 17 is made to associate each of the operators and the corresponding actual work performance information of the operator with each other, and store the work performance of the operator as a history. When a specific operator has a plurality of actual work performances, the actual work performance database 17 stores a plurality of pieces of actual work performance information corresponding to the actual work performances for the operator.

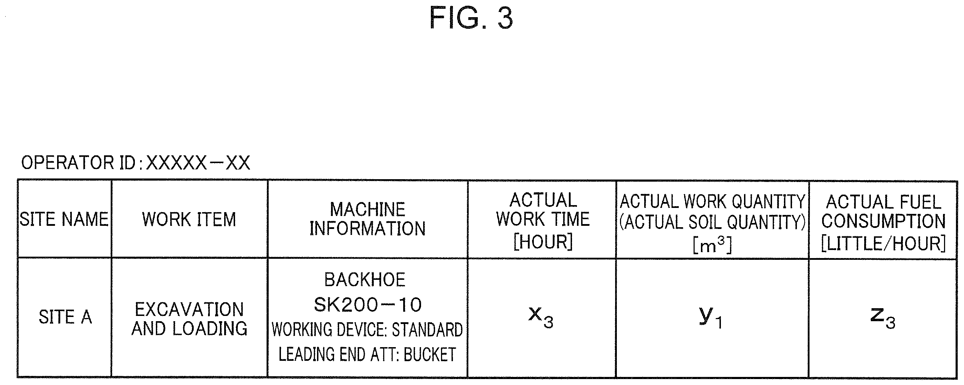

Fig. 3 shows exemplary actual work performance information stored in the actual work performance database 17. In the specific example shown in Fig. 3, the actual work performance information stored in the actual work performance database 17 includes an operator ID, a site name, a work item, machine information, an actual work time, an actual work quantity, and an actual fuel consumption.

The operator ID represents identification information for uniquely identifying each of the operators entered in the server 10.

The site name represents information for specifying a site where the operation has been actually executed.

The operation of the construction machine 50 includes work items of, for example, "excavation and loading", "flat ground preparation", "flat ground forming", "slope preparation", and "slope forming". The work item of excavation and loading represents a work of excavating soil, ground, bedrock, and the like, and loading the excavated ones onto a dump truck. The work item of flat ground forming represents a work of forming the flat ground by removing unevenness of the ground. The work item of flat ground preparation represents a work of preparing the flat ground by way of the flat ground forming. The work item of slope forming represents a work of forming the slope which is artificially made by removing the soil from the ground or adding the soil to the ground. The work item of slope preparation represents a work of preparing the slope formed by way of the slope forming. However, the work items listed above are mere examples, and the operation of the construction machine 50 may include other work items.

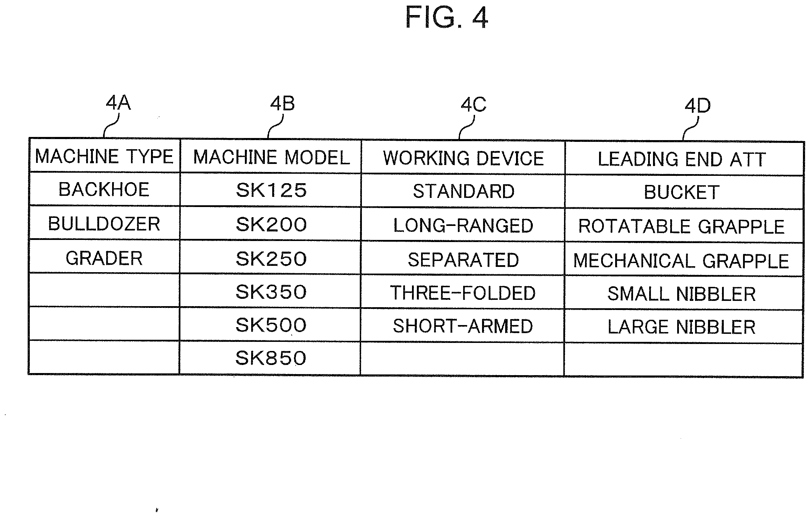

The machine information includes information about, for example, a type and a model of the construction machine 50, a working device type, and a leading end attachment type, each actually adopted in each work. Fig. 4 shows a table of lists of types of the construction machine 50, models of the construction machine 50, working device types each for use in the construction machine 50, and leading end attachment (leading ATT) types each for use in the construction machine 50. As shown in column 4A, the types of the construction machine 50 in the embodiment include "BACKHOE", "BULLDOZER", and "GRADER". As shown in column 4B, the models of the construction machine 50 in the embodiment include "SKI25", "SK200", "SK250" and other machine models. The model with a larger model number has a greater maximal excavation force. As shown in column 4C, the working device types in the embodiment include five types of "STANDARD", "LONG-RANGED", "SEPARATED," "THREE-FOLDED", and "SHORT-ARMED". As shown in column 4D, the leading end attachment types in the embodiment include five types of "BUCKET", "ROTATABLE GRAPPLE", "MECHANICAL GRAPPLE", "SMALL NIBBLER", and "LARGE NIBBLER".

The actual work time is a time in which an operation or a work to be executed by the construction machine 50 has been actually performed by the operator by the remote manipulation. The actual work time represents a time period from a start to a finish of the operation or work of the construction machine 50. In this respect, when the operation or work of the construction machine 50 needs a plurality of days, the relevant actual work time indicates a total value (cumulative value) of the work time over the days.

For instance, the master device control part 301 of the master device 30 acquires the start and the finish of the operation or work, and can calculate, based on the acquired start and finish, the actual work time. The master device control part 301 causes the information storage part 302 to store the calculated work time. The master device control part 301 can determine each of the start and the finish in response to, for example, an input (e.g., switching action) of the operator received by an unillustrated input part of the master device 30. The master device control part 301 may cause the information storage part 302 to store, as the actual work time, a time input by the operator via the input part after the finish of the operation or work.

The actual work quantity is a work quantity in which the operation or work of the construction machine 50 has been actually performed by the operator by the remote manipulation. When the operation of the construction machine 50 includes, for example, the work item "excavation and loading", the actual work quantity may represent a total quantity (cumulative quantity) of the soil obtained from the ground excavated from the start to the finish of the relevant work. In this case, for example, the master device control part 301 can acquire the actual work quantity by calculating, based on a load detected by an unillustrated load detection sensor provided in a working device of the construction machine 50, a soil quantity loaded to a bucket of the construction machine 50 per loading to the bucket, and calculating the total soil quantity from the start to the finish of the work.

The actual work quantity may represent, for example, a total quantity (cumulative quantity) of the soil obtained by excavating the ground and loading the soil from the excavated ground to the dump truck during the time period from the start to the finish of the work. In this case, for example, the master device control part 301 can acquire the actual work quantity by acquiring, based on a load detected by an unillustrated load detection sensor provided in the dump truck, a soil quantity loaded to the dump truck per truck and calculating a total soil quantity obtained during the time period from the start to the finish of the work.

The master device control part 301 may cause the information storage part 302 to store, as the actual work quantity, a work quantity input by the operator via the input part after the finish of the work.

The actual fuel consumption represents a fuel consumption actually made in the operation or work of the construction machine 50 by the remote manipulation by the operator. For instance, the master device control part 301 can calculate, based on a driving time and a fuel consumption quantity of the construction machine 50, an actual fuel consumption. The driving time may adopt, for example, a value equal to the value of the actual work time, or only a section of the actual work time in which the engine of the construction machine 50 is driven. For instance, the master device control part 301 can acquire the fuel consumption quantity of the fuel consumed during the time period from the start to the finish of the operation or work in response to a signal output from a fuel residual quantity sensor provided in a fuel tank of the construction machine 50.

The event database 18 stores respective event information of the operators entered in the server 10. The event database 18 stores the event information in association with the corresponding actual work performance information. Specifically, the event database 18 stores the event information in association with the corresponding operator and the actual work performance information about the actual work performance executed by the operator. When a specific operator has a plurality of actual work performances, the event database 18 stores a plurality of pieces of event information corresponding to a plurality of pieces of actual work performance information.

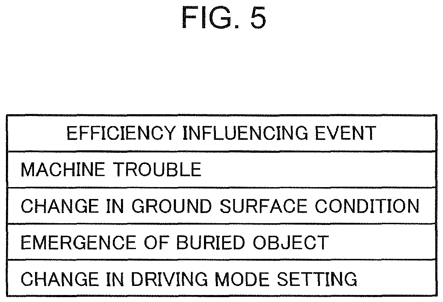

As described above, the event information is information about an efficiency influencing event which is found to influence an efficiency of the operation in the operation of the construction machine 50 by the remote manipulation by the operator. Fig. 5 shows a specific exemplary efficiency influencing event. The specific example shown in Fig. 5 includes efficiency influencing events of "machine trouble", "change in ground surface condition", "emergence of buried object", and "change in driving mode setting".

The "machine trouble" represents an event of decreasing the efficiency of the operation due to a trouble caused in the construction machine 50 in the operation of the construction machine 50. Specifically, the machine trouble represents, for example, an event of increasing the work time due to the machine trouble.

The "change in ground surface condition" represents an event of decreasing or improving the efficiency of the operation in accordance with a change in the ground surface condition on the operation site in the operation of the construction machine 50. Specifically, the change in the ground surface condition represents, for example, an event of decreasing the efficiency of the operation in accordance with a deterioration in the ground surface condition attributed to raining in the operation of the construction machine 50, or an event of improving the ground surface condition owing to the raining in the operation of the construction machine 50.

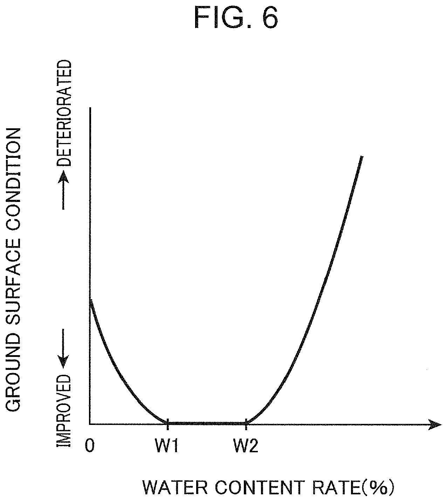

Fig. 6 is a graph schematically showing a relation between a water content rate of the ground surface and a ground surface condition. Concerning the work item of the excavation and loading, the ground surface having a water content rate falling within, for example, an appropriate range of W1 to W2 as shown in Fig. 6 makes the ground surface condition better to be suitable for the excavation and the loading. In contrast, the ground surface becomes stiffer as the water content rate of the ground surface decreases from W1, and accordingly, the ground surface condition deteriorates unsuitably for the excavation and loading. Besides, the ground surface becomes softener and contains more moisture as the water content rate of the ground surface increases from W2, and accordingly, the ground surface condition deteriorates unstably for the excavation and loading.

Other examples of the change in the ground surface condition include "change in soil quality". The term "change in soil quality" means that the soil quality changes in the operation of the construction machine 50. The soil quality is classifiable in accordance with a particle size of the soil, but the classifying way is not limited thereto. Examples of classification of the soil quality depending on, for example, the particle size of the soil include classifying the soil into, for example, cray, silt, sand, and gravel. The "change in soil quality" represents an event of influencing the efficiency of the operation of the construction machine 50.

The "emergence of buried object" represents an event of decreasing the efficiency of the operation due to emergence of a buried object, such as a rock, during the excavation of the ground on the operation site in the operation of the construction machine 50. The object has been buried in the ground before the operation, and thus the orderer could not grasp the object in advance of the start of the operation.

The "change in driving mode setting" represents an event of decreasing or improving the efficiency of the operation in accordance with a change in a driving mode setting for the construction machine 50 by the operator in the operation of the construction machine 50.

Specifically, in the embodiment, the driving mode includes three modes, for example, "H mode", "S mode", and "ECO mode". The H mode represents a mode selectable by the operator when the operator puts an emphasis on the work quantity. The fuel consumption (little/hour, i.e., L/hr) in the H mode is larger than the fuel consumption (L/hr) in the S mode, that is, the fuel consumption deteriorates in the H mode. The S mode represents a mode selectable by the operator when the operator puts an emphasis on a balance between the work quantity and the fuel consumption. The ECO mode represents a mode selectable by the operator when the operator puts an emphasis on the fuel consumption under a small work load. The fuel consumption (L/hr) in the ECO mode is smaller than the fuel consumption (L/hr) in the S mode, that is, the fuel consumption improves in the ECO mode.

In contrast, the fuel consumption increases (deteriorates) in response to a change in the driving mode setting, for example, from the S mode to the H mode in the operation of the construction machine 50. In contrast, the fuel consumption decreases (improves) in response to a change in the driving mode setting, for example, from the S mode to the ECO mode in the operation of the construction machine 50.

The event information includes: information about an amount of increase or decrease in the work time increased or decreased due to the efficiency influencing event in the operation of the construction machine 50 by the remote manipulation; information about an amount of increase or decrease in the work quantity increased or decreased due to the efficiency influencing event in the operation; and information about an amount of increase or decrease in the fuel consumption increased or decreased due to the efficiency influencing event in the operation.

The skill level calculation part 13 of the server 10 generates, based on information about at least one of the events included in the efficiency influencing events, an amount of increase or decrease in the work time. Similarly, the skill level calculation part 13 of the server 10 generates, based on the information about at least one of the events included in the efficiency influencing events, an amount of increase or decrease in the work quantity, and generates, based on information about at least one of the events included in the efficiency influencing events, an amount of increase or decrease in the fuel consumption.

In the embodiment, the skill level calculation part 13 calculates, for example, each amount of increase or decrease in the following manner. The skill level calculation part 13 generates the amount of increase or decrease in the work time, based on information about the event of "machine trouble", the event of "change in ground surface condition", and the event of "emergence of buried object" among the efficiency influencing events. Besides, the skill level calculation part 13 generates, based on the information about the event of "change in ground surface condition" among the efficiency influencing events, the amount of increase or decrease in the work quantity. The skill level calculation part 13 further generates, based on information about the event of "change in driving mode setting" among the efficiency influencing events, the amount of increase or decrease in the fuel consumption.

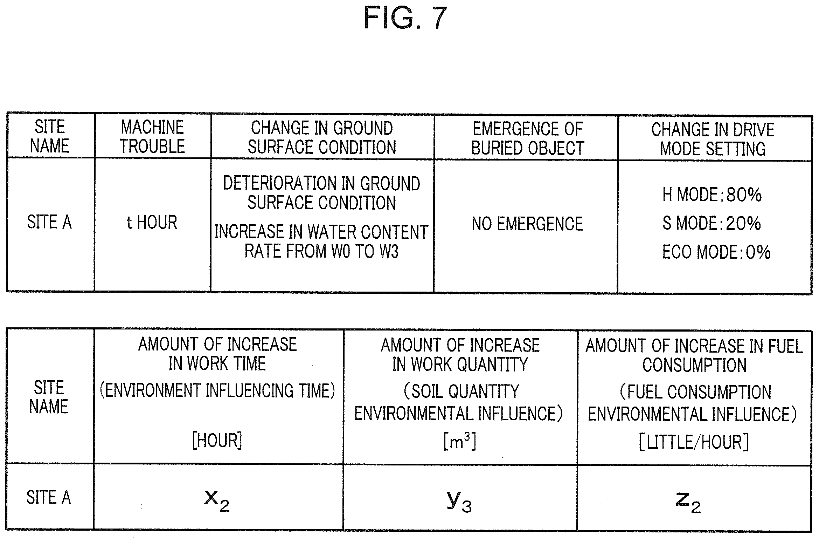

Fig. 7 shows specific exemplary event information. In the specific example shown in Fig. 7, the event information includes, in the operation of the construction machine 50, information showing an occurrence of a machine trouble in the construction machine 50, information showing a deterioration in the ground surface condition, information showing no emergence of a buried object, and information showing a change in the driving mode setting.

As shown in Fig. 7, the machine trouble occurs in t time. Fig. 7 also shows the ground surface condition where the water content rate increases from W0 to W3. The water content rate W0 indicates a value in the range of W1<W0<W2 in the graph shown in Fig. 6. The water content rate W3 indicates a value in the range of W3>W2 in the graph shown in Fig. 6. Moreover, as shown in Fig. 7, the driving mode is set to the S mode in a time section occupying 20% of an actual work time for the operation, and set to the H mode in another time section occupying 80% of the actual work time.

In the embodiment, the skill level calculation part 13 stores a table having a relation between the water content rate and the increase or decrease in the work time associated with each other, and generates an increase or decrease amount xa of the work time attributed to the ground surface condition with reference to the table. The skill level calculation part 13 further calculates, based on the increase or decrease amount xa of the work time and the time t in which the machine trouble occurs, an amount of increase or decrease x2 (hr) in the work time. The amount of increase or decrease x2 with a plus sign means a decrease in the efficiency of the operation due to the efficiency influencing event, that is, the work time needs extra x2 hours. Conversely, the amount of increase or decrease x2 with a minus sign means an improvement in the efficiency of the operation owing to the efficiency influencing event, that is, the work time decreases by x2 hours.

The skill level calculation part 13 stores a table having a relation between the water content rate and the increase or decrease in the work quantity associated with each other, and generates an increase or decrease amount ya of the work quantity attributed to the ground surface condition with reference to the table. Besides, the skill level calculation part 13 sets the increase or decrease amount ya of the work quantity to the amount of increase or decrease y3 in the work quantity. The amount of increase or decrease y3 with a plus sign means a decrease in the efficiency of the operation attributed to the efficiency influencing event, that is, the work quantity decreases by the amount y3. Conversely, the amount of increase or decrease y3 with a minus sign means an improvement in the efficiency of the operation owing to the efficiency influencing event, that is, the work quantity increases by the mount y3.

The skill level calculation part 13 stores a table having a relation between the driving mode and the fuel consumption associated with each other, and generates an increase or decrease amount za attributed to the change in the driving mode setting. Besides, the skill level calculation part 13 sets the increase or decrease amount za of the fuel consumption to the amount of increase or decrease z2 in the fuel consumption n quantity. The amount of increase or decrease z2 with a plus sign means a decrease in the efficiency of the operation attributed to the efficiency influencing event, that is, the fuel consumption increases by the amount z2. Conversely, the amount of increase or decrease z2 with a minus sign means an improvement in the operation of the fuel consumption owing to the efficiency influencing event, that is, the fuel consumption decreases by the mount z2.

The skill level calculation part 13 causes the event database 18 to store each of the generated amounts of increase or decrease z2, y3, and z2.

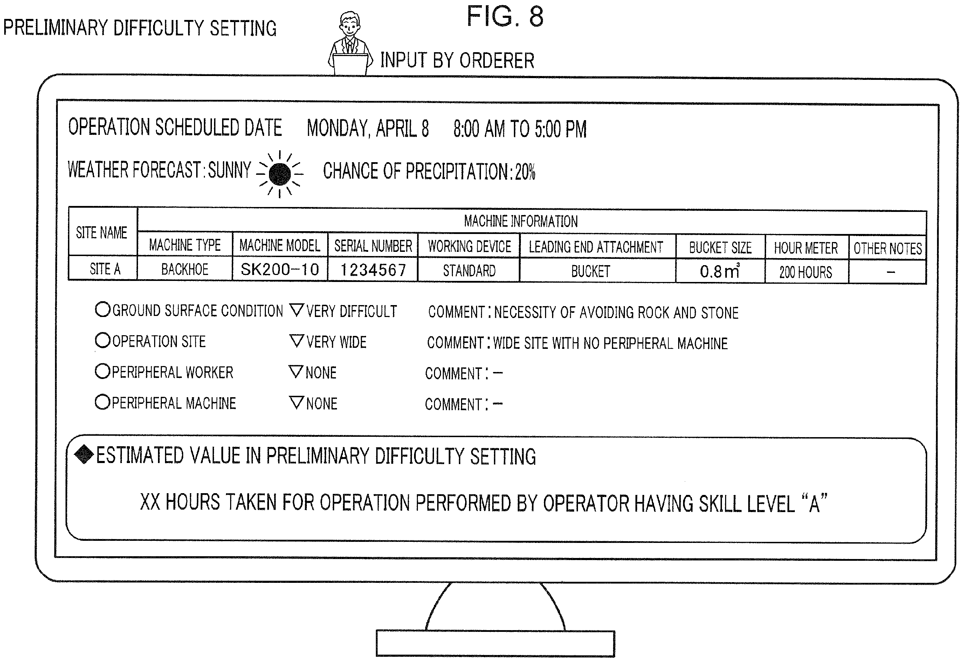

The operation schedule database 19 stores the operation schedule information sent from the orderer terminal 20. Fig. 8 shows specific exemplary operation schedule information displayed as a detail screen image including information input by the orderer terminal in the orderer terminal 20. As shown in Fig. 8, the operation schedule information includes a scheduled date for the operation of the construction machine 50, workplan information, machine model information for use in the operation, and preliminary difficulty information. The workplan information includes a prospective work time, a prospective work quantity (prospective soil quantity), and a prospective fuel consumption.

The prospective work time represents a time period estimated to be necessary to complete an operation or a work of the construction machine 50. The prospective work time is predetermined by the orderer before the operator executes the remote manipulation. In the specific example shown in Fig. 8, the prospective work time is set to 8 hours (from 8:00 am to 5:00 pm, including 1 hour break).

The prospective work quantity represents a work quantity estimated to be necessary to complete the operation or work of the construction machine 50. The prospective work quantity is predetermined by the orderer before the operator executes the remote manipulation.

The prospective fuel consumption represents a fuel consumption estimated in the operation or work of the construction machine 50. The prospective fuel consumption is predetermined by the orderer before the operator executes the remote manipulation. For instance, the orderer determines the fuel consumption in the operation or work of the construction machine 50 in accordance with the machine model adopted in the operation, the work item, and the driving mode setting. Specifically, in the embodiment, the orderer determines the prospective fuel consumption on the premise of the model "SK200-10" for the construction machine 50, the work item "excavation and loading", and the "S mode" for the driving mode setting.

Although the screen image in Fig. 8 does not illustrate the prospective work quantity and the prospective fuel consumption, another screen image different from the screen image on a different page receives an input of each of the prospective work quantity and the prospective fuel consumption. The orderer thus inputs the prospective work quantity and the prospective fuel consumption in the screen for the input.

The machine model information includes information about, for example, a type and a model of the construction machine 50, a working device type, a leading end attachment type, a bucket size, and an hour meter, to be adopted in the operation or work. The machine type, the machine model, the working device type, and the leading end attachment type are equivalent to those described with reference to Fig. 4. The bucket size represents a capacity of the bucket when the bucket is adopted as the leading end attachment. The hour meter indicates a cumulative use time of the construction machine 50 to be used in the operation or work. The specific example shown in Fig. 8 shows the hour meter indicating the cumulative time of 200 hours. The construction machine 50 is determined from this perspective not to deteriorate in the fuel efficiency so much in a lapse of time.

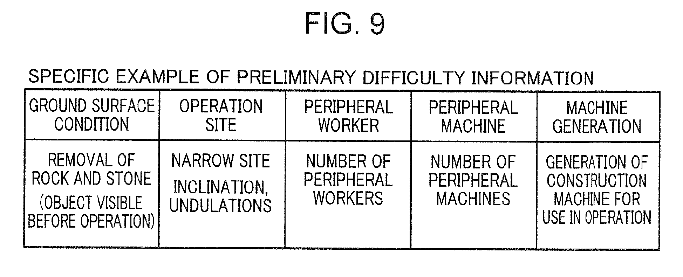

The preliminary difficulty information is information about a difficulty in the operation predetermined by the orderer before the operator executes the remote manipulation. Fig. 9 shows specific exemplary preliminary difficulty information. In the specific example shown in Fig. 9, the preliminary difficulty information includes information about a "ground surface condition", information about an "operation site", information about a "peripheral worker", information about a "peripheral machine", and information about a "machine generation".

As shown in Fig. 9, the information about the "ground surface condition" includes information about, for example, necessity of removing an object, such as a rock, and information about a water content rate of the ground surface condition. The object in the preliminary difficulty information has at least a portion exposed above the ground surface, and thus is visually observable by the orderer before the operation of the construction machine 50. The relation between the water content rate of the ground surface and the ground surface condition is equivalent to that described with reference to Fig. 6. Therefore, the "ground surface condition" in the preliminary difficulty information serves as an index for allowing the orderer to set the prospective work time and the prospective work quantity.

The information about the "operation site" includes information of, for example, an area of the operation site, and inclination and undulations on the operation site. The area of the operation site serves as an index for allowing the orderer to set the prospective work time and the prospective work quantity. The difficulty in the operation increases as the inclination on the operation site is larger. Also, the difficulty in the operation increases as the operation site has more undulations. From these perspectives, each of the inclination and the undulations on the operation site serves as an index for allowing the orderer to set the prospective work time and the prospective work quantity.

The information about the "peripheral worker" includes information about the number of other workers existing around the construction machine 50 in the operation of the construction machine 50. The difficulty in the operation increases as the number of other workers is larger. Therefore, the information about the "peripheral worker" serves as an index for allowing the orderer to set the prospective work time and the prospective work quantity.

The information about the "peripheral machine" includes information about the number of other construction machines existing around the construction machine 50 in the operation of the construction machine 50. The difficulty in the operation increases as the number of other construction machines is larger. Hence, the information about the "peripheral machine" serves as an index for allowing the orderer to set the prospective work time and the prospective work quantity.

The information about the "machine generation" includes, for example, information about the construction machine, such as a serial number thereof, for specifying a time in which the construction machine was manufactured, i.e., specifying the generation of the construction machine. A construction machine in a newer generation achieves a higher fuel efficiency in the operation. Accordingly, the information about the "machine generation" serves as an index for allowing the orderer to set the prospective fuel consumption.

In the embodiment, the "ground surface condition" in the preliminary difficulty information includes a rock visually observable on the operation site, and thus the difficulty concerning the ground surface condition is set to a level of "very difficult". Moreover, the "operation site" in the preliminary difficulty information is defined at a level of "very wide", and a specific area of the operation site is input to an unillustrated detail screen image. Each of the "peripheral worker" and "peripheral machine" in the preliminary difficulty information is set to "None".

The orderer may set, based on the preliminary difficulty information, each of the prospective work time, the prospective work quantity, and the prospective fuel consumption included in the workplan information, but a computer (e.g., the orderer terminal 20) may set them in the following manner. Specifically, a workplan setting part included in the computer may store a table having a relation in which the prospective work time, the prospective work quantity or the prospective fuel consumption, and the preliminary difficulty information are associated with one another, and determine the prospective work time, and the prospective work quantity or the prospective fuel consumption with reference to the table. Alternatively, each of the prospective work time, the prospective work quantity, and the prospective fuel consumption may be determined with use of artificial intelligence (AI).

For example, the prospective work time is used as an example for explanation in detail. In a case where a difficulty in an operation or a work is defined as a standard and a prospective time for the operation or work to be performed by an operator having rank A is set to 4 hours, the prospective work time in further consideration of the preliminary difficulty information is set to, for example, 5 hours.

As shown in Fig. 1, the skill level calculation part 13 of the server 10 calculates a skill level of the operator for the remote manipulation, based on the evaluation information including the actual work performance information stored in the actual operation performance database 17, the event information stored in the event database 18, and the workplan information stored in the operation schedule database 19. The skill level calculation part 13 calculates the skill level per operation of the construction machine 50. The skill level calculation part 13 causes the operator database 16 to store each of the calculated skill levels.

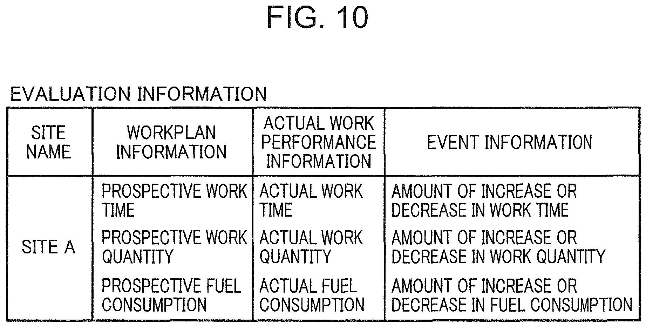

Fig. 10 shows specific exemplary evaluation information. In the embodiment, the evaluation information includes the workplan information, the actual work performance information, and the event information as shown in Fig. 10. The workplan information includes the prospective work time, the prospective work quantity, and the prospective fuel consumption. The actual work performance information includes the actual work time, the actual work quantity, and the actual fuel consumption. The event information includes an amount of increase or decrease in the work time, an amount of increase or decrease in the work quantity, and an amount of increase or decrease in the fuel consumption.

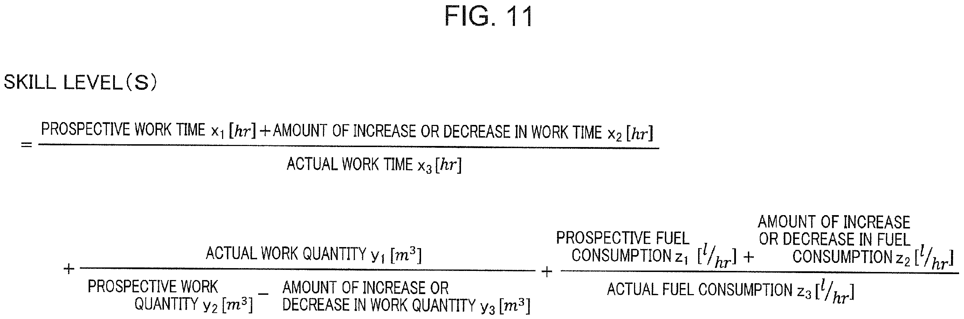

Fig. 11 shows an exemplary formula for calculating a skill level. In the specific example shown in Fig. 11, the skill level is calculated by using a formula including a term concerning the work time, a term concerning the work quantity (soil quantity), and a term concerning the fuel consumption. Each of the "amount of increase or decrease in work time" in the term concerning the work time, "amount of increase or decrease in work quantity" in the term concerning the work quantity, and "amount of increase or decrease in fuel consumption" in the term concerning the fuel consumption is calculated by, for example, the above-described way with reference to Fig. 7. As clearly seen from the formula shown in Fig. 11, the value of the skill level indicates "3", when the actual work time equals to the prospective work time, the actual work quantity (actual soil quantity) equals to the prospective work quantity (prospective soil quantity), the actual fuel consumption equals to the prospective fuel consumption, and further when each of the amount of increase or decrease in the work time, the amount of increase or decrease in the work quantity, and the amount of increase or decrease in the fuel consumption indicates zero. In other words, in a case where an actual work has been completed as estimated, the skill level indicates the value of "3". It is seen from this perspective that the manipulation skill of the operator is higher than the standard when the value of the calculated skill level is greater than "3", and that the manipulation of the skill level of the operator is lower than the standard when the value is smaller than "3".

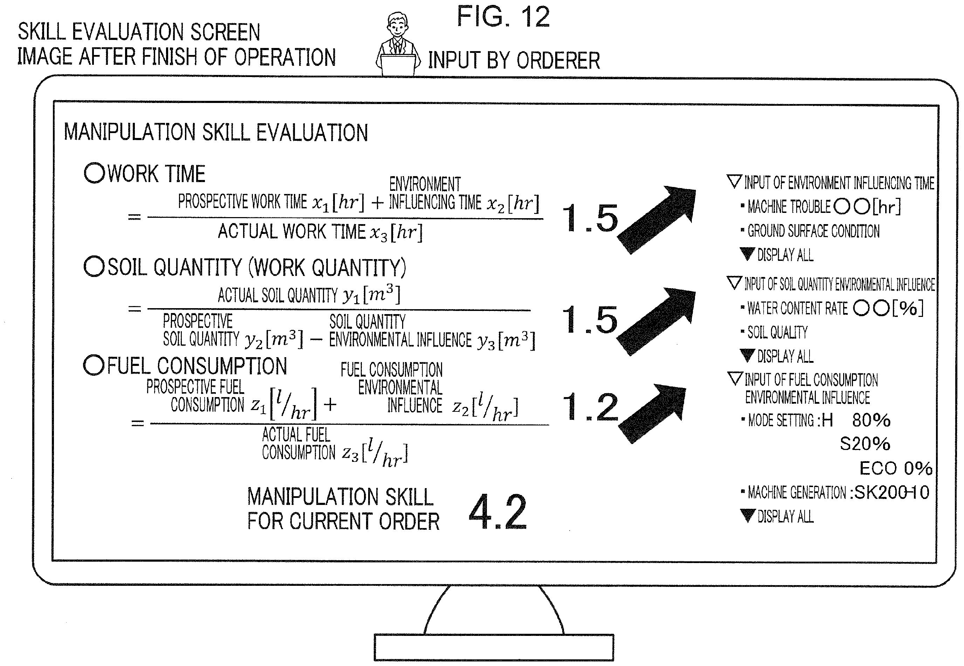

Fig. 12 shows a specific exemplary detail screen image of an evaluation result of a manipulation skill. In the specific example shown in Fig. 12, a value calculated by the term concerning the work time indicates "1.5", a value calculated by the term concerning the work quantity (soil quantity) indicates "1.5", and a value calculated by the term concerning the fuel consumption indicates "1.2". In this way, the skill level calculation part 13 obtains the value "4.2" for the skill level S from the values in the terms, and the calculated skill level S is stored in the operator database 16. In Fig. 12, an "environment influencing time" recited in the term concerning the work time corresponds to the amount of increase or decrease in the work time, a "soil quantity environmental influence" recited in the term concerning the work quantity corresponds to the amount of increase or decrease in the work quantity, and a "fuel consumption environmental influence" in the term concerning the fuel consumption corresponds to the amount of increase or decrease in the fuel consumption. Furthermore, an "actual soil quantity" in the term concerning the work quantity corresponds to the actual work quantity, and a "prospective soil quantity" corresponds to the prospective work quantity.

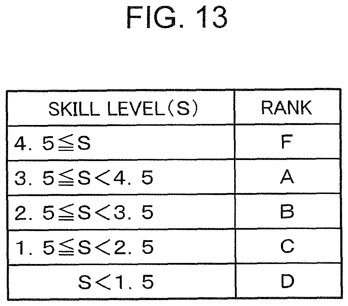

Fig. 13 shows a specific exemplary rank determination table. The skill level calculation part 13 determines the rank of skill level S with reference to the rank determination table shown in Fig. 13, and the determined rank of the skill level S is stored in the operator database 16. The rank determination table is stored in the memory of the server 10 in advance, and includes columns "SKILL LEVEL" and "RANK". In the specific example shown in Fig. 13, the five ranks of the skill levels are determined in descending order of F, A, B, C, and D. Therefore, the rank determination table registers ranks F to D in this order in the column "RANK". The column "SKILL LEVEL" has registration of a range of values of the corresponding skill level for each of the ranks F to D. The total value of the skill level S denoted by "4.2" in the specific example corresponds to the rank "A" with reference to the rank determination table.

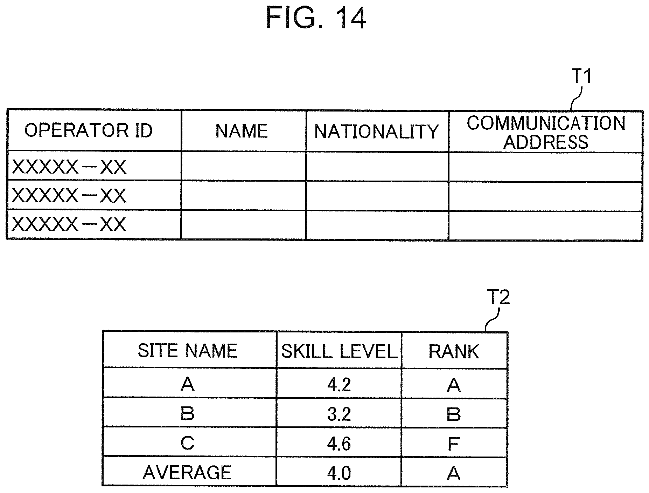

Fig. 14 shows a specific example of the operator database 16. The operator database 16 includes an operator table T1 and a skill level table T2. The operator table T1 registers personal information of the operators entered in the server 10 in advance. The skill level table T2 registers the skill level of each of the entered operators per operation or work item.

Specifically, the operator table T1 includes columns "OPERATOR ID", "COUNTRY", and "COMMUNICATION ADDRESS". The column "OPERATOR ID" represents an identifier for uniquely identifying each of the entered operators. The column "NAME" represents the name of the operator. The column "COUNTRY" represents a country, such as Japan and Germany, where the operator lives. The column "COMMUNICATION ADDRESS" represents a communication address of the master device 30 to be used by the operator.

The skill level table T2 includes a database created for each of the entered operators per work item. The specific example shown in Fig. 14 includes a database of the work item "excavation and loading" for a specific operator. The database shows skill levels and ranks thereof for three sites A, B, and C, and further shows an average value of the skill levels, and the average rank.

The forbidding part 14 shown in Fig. 1 forbids the operator from executing an actual work mode when the skill level is lower than a reference level. The actual work mode is a mode for allowing the operator to actually and remotely manipulate the construction machine 50. In the embodiment, it is determined whether the skill level is equal to or lower than the reference level for each of the work items. For instance, the reference level is set to rank C. In the example shown in Fig. 14, the skill level for the excavation and loading is ranked "A", and thus the operator with this skill level is permitted to use the actual work mode for the work item "excavation and loading". Specifically, the operator can obtain a remuneration by actually and remotely manipulating the construction machine 50 for the work item.

Specifically, when permitting a specific operator to use the actual work mode, the forbidding part 14 sets a permission flag stored in a memory of the master device 30 of the operator to 1. For example, the specific operator is permitted to use the actual work mode for the work item "excavation and loading". In this case, a permission flag relevant to the work item "excavation and loading" stored in the memory of the master device 30 of the operator is set from "0" to "1". In this case, when the operator makes a request for execution of an actual work concerning the work item by selecting the actual work mode in the master device 30, the master device control part 301 of the master device 30 accepts the request. Conversely, a setting flag for an impermissible work item in connection with the corresponding operator is set to "0". In this case, when the operator makes a request for an execution of the actual work concerning the work item with the permission flag set to "0" by selecting the actual work mode in the master device 30, the master device control part 301 refuses the request.

The orderer terminal 20 includes a computer such as a personal computer owned by the orderer who places an operation order to the operator. The orderer is a person who makes an operation schedule for an operation such as a construction operation, and places an operation order to the operator. The operator may be an employee employed by an operation order receiving company, or a self-business owner who is not directly employed by such an operation order receiving company.

The orderer terminal 20 includes a display part 201, a control part 202, a manipulation part 203, a communication part 204, and an unillustrated memory.

The display part 201 includes, for example, a display, such as a liquid crystal display. The control part 202 includes, for example, a processor such as a CPU, and controls the entirety of the orderer terminal 20. In the embodiment, when receiving from the orderer an input of an instruction for a query request to confirm a skill level of a specific operator, the control part 202 sends the query request including a relevant operator ID of the operator to the server 10 via the communication part 204.

The manipulation part 203 includes, for example, a keyboard and a mouse, and receives the input of the instruction for the query request to confirm the skill level. The communication part 204 includes a communicator which connects the orderer terminal 20 and the communication channel NT1 to each other, and transmits the query request received by the manipulation part 203 to the server 10 via the communication channel NT1.

Hereinafter, an exemplary transaction between the orderer and the operator will be described. First, in response to an input of the operation schedule information including the workplan information, the machine model information, and the preliminary difficulty information from the orderer, the orderer terminal 20 sends the operation schedule information to the server 10. The server 10 sends, to the orderer terminal 20, an operator list of operator candidates picked out based on a content of the operation schedule information. Specifically, in an aspect where the server 10 picks out a specific operator, the server 10 may be configured to, for example, compare a reference skill level included in the operation schedule information and skill levels of a plurality of operator candidates, and select the specific operator having a skill level which is equal to or higher than the standard skill level.

The operator list includes a browser button for allowing the orderer to see a work level. When the orderer selects the browser button, the orderer terminal 20 sends a query request as described above to the server 10. The server 10 reads out a skill level of the corresponding operator from the operator database 16, and sends the read skill level to the orderer terminal 20. The orderer thus can know a skill level of an operator attractive to the orderer among the operators shown in the operator list. The orderer finally determines an operator who meets the request for the operation while confirming the skill level of each of the operators shown in the operator list. The orderer terminal 20 sends, to the server 10, the order request determined by the orderer to the operator.

Furthermore, the server 10 notifies the corresponding operator of the order request. When the operator receives the order request, the server 10 issues an access code for the master device 30 as defining that the operator and the orderer reach an agreement therebetween, and sends the access code to the master device 30. The operator can consequently perform the operation ordered from the orderer by using the master device 30.

Although described herein is that the skill level of the operator is notified to the orderer in response to the selection, serving as a trigger, of the browser button displayed in the operator list, the notifying way is a mere example. For instance, the skill level of each of the operators may be displayed in the operator list in advance.

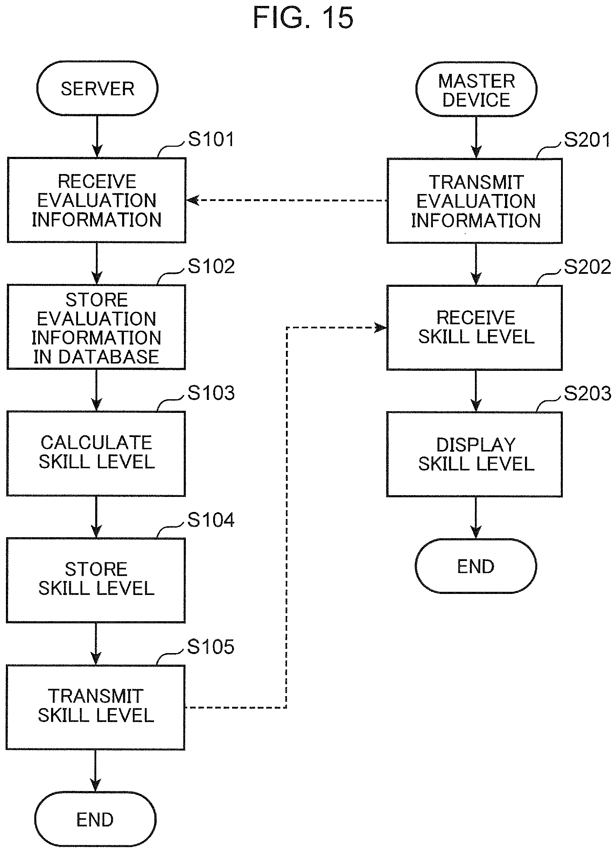

Fig. 15 shows a flowchart of a process of calculating a skill level in the skill evaluation system according to the embodiment.

When the master device control part 301 of the master device 30 detects a finish of the actual work mode, the communication part 305 transmits evaluation information including actual work performance information about an operation of the construction machine 50 and event information to the server 10 (step S201 in Fig. 15).

The communication part 204 of the server 10 receives the evaluation information (step S101). The database management part 15 of the server 10 causes the actual operation performance database 17 to store the actual work performance information and causes the event database 18 to store the event information, among the evaluation information received by the communication part 204 (step S102).

The skill level calculation part 13 calculates a skill level with reference to the content of the updated database (step S103), and stores the calculated skill level in the operator database 16 (step S104). The communication part 11 transmits the calculated skill level to the master device 30 (step SI05).

The communication part 305 of the master device 30 receives the skill level (step S202). The display part 303 of the master device 30 displays the skill level thereon (step S203). The operator can consequently confirm how much the skill level of the operator increases.

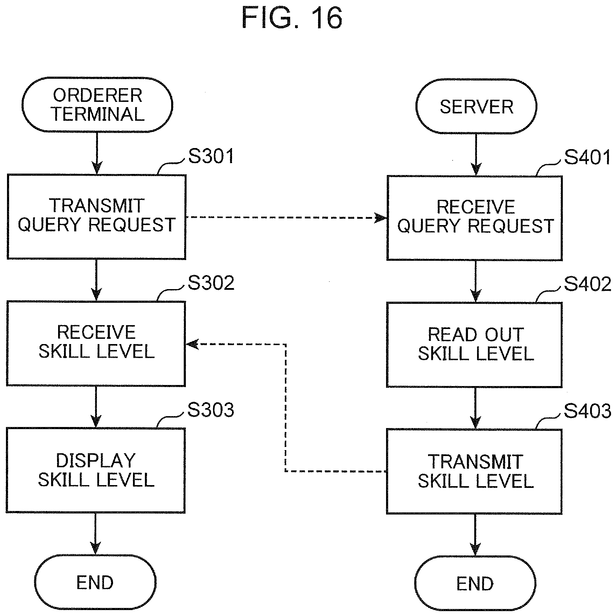

Fig. 16 shows a flowchart of a process of sending the skill level to the orderer terminal in the skill evaluation system according to the embodiment. In the orderer terminal 20, when the manipulation part 203 receives from an orderer an input of instruction for a query request to confirm a skill level of a specific operator, the communication part 204 transmits the query request to the server 10 (step 301). The query request includes a relevant operator ID of the specific operator.

The communication part 11 of the server 10 receives the query request (step S401). The presentation part 12 of the server 10 reads out a skill level of the corresponding operator from the operator database 16 (step S402). The communication part 11 of the server 10 transmits the skill level to the orderer terminal 20 (step S403). The communication part 204 of the orderer terminal 20 receives the skill level (step S302). The display part 201 of the orderer terminal 20 displays the skill level thereon (step S303). The orderer thus can place an order for the operation to an operator attractive to the order after confirming the skill level of the operator.

As described above, in the embodiment, the skill level is calculated in consideration of the efficiency influencing event as well as the actual work performance. In this configuration, the manipulation skill of the operator is fairly evaluated even in a case of an occurrence of an efficiency influencing event ungraspable by an orderer in advance of a start of an operation to be executed by the construction machine 50. The orderer thus can know the fairly evaluated skill level of the operator. Moreover, the efficiency influencing event is reflected in the skill evaluation even in a case of an occurrence of an unfavorable event in the operation. This avoids concentration of operators on good environmental operation sites, and encourages the operators to actively receive orders on poor environmental operation sites as well.

In the embodiment, the acquisition part acquires operation schedule information sent from the orderer terminal and including workplan information about a plan for the operation of the construction machine, and the evaluation information further includes the workplan information. The skill level is thus calculated, based on the evaluation information including the operation plan information, the actual work performance information, and the event information. In other words, the skill level is calculated in consideration of the efficiency influencing event, and the calculation of the skill level is executable based on comparison between the workplan and the actual work performance in the embodiment.

In the embodiment, the workplan information includes the prospective work time, the actual work performance information includes the actual work time, and the event information includes information about an amount of increase or decrease in the work time. This enables the calculation of the skill level based on a comparison between the prospective work time and the actual work time in further consideration of the amount of increase or decrease in the work time.

In the embodiment, the workplan information includes the prospective work quantity, the actual work performance information includes the actual work quantity, and the event information includes information about an amount of increase or decrease in the work quantity. This enables the calculation of the skill level based on a comparison between the prospective work quantity and the actual work quantity in further consideration of the amount of increase or decrease in the work quantity.

In the embodiment, the workplan information includes the prospective fuel consumption, the actual work performance information includes the actual fuel consumption, and the event information includes information about an amount of increase or decrease in the fuel consumption. This enables the calculation of the skill level based on a comparison between the prospective fuel consumption and the actual fuel consumption in further consideration of the amount of increase or decrease in the fuel consumption.

In the embodiment, the workplan information is set, based on information including the preliminary difficulty information. In this manner, the skill level is calculated in consideration of the preliminary difficulty information in addition to the efficiency influencing event. Consequently, the manipulation skill of the operator can be fairly evaluated.

### Modifications

The present invention can adopt modifications described below.
(A) Although the communication part 11 (exemplary acquisition part) is configured to acquire the event information after an operation of the construction machine 50 in the embodiment, the present invention should not be limited thereto. In the present invention, the acquisition part may acquire the event information during the operation of the construction machine 50.
(B) Although the evaluation information includes the workplan information, and the workplan information includes the prospective work time, the prospective work quantity, and the prospective fuel consumption in the embodiment, the present invention should not be limited thereto. In the present invention, the workplan information may include at least one of the prospective work time, the prospective work quantity, and the prospective fuel consumption.
(C) Although the evaluation information includes the workplan information in the embodiment, the present invention should not be limited thereto. In the present invention, the evaluation information may consist of only the actual work performance information and the event information, or may include the actual work performance information, the event information, and other information except the workplan information.
(D) Although the workplan information is set, based on the information including the preliminary difficulty information in the embodiment, the present invention should not be limited thereto.
(E) Each of the amount of increase or decrease in the work time, the amount of increase or decrease in the work quantity, and the amount of increase or decrease in the fuel consumption may be calculated, for example, by using a formula set in advance in connection with the evaluation information, may be determined by the orderer based on the evaluation information, or may be determined by using AI.
(F) Although the operation of the construction machine represents a construction operation to be executed by the hydraulic excavator in the embodiment, the present invention should not be limited thereto. In the invention, the operation of the construction machine may include, for example, a demolition operation and a forestry operation. The demolition operation covers, for example, a demolition operation to be executed by a nibbler, and a sorting operation to be executed by a grappler. The forestry operation covers, for example, a tree selection operation, a felling operation, and a pruning operation.

### Summary of embodiments

The technical features of the embodiment will be summarized below.

The present invention relates to a skill evaluation system for evaluating a manipulation skill of an operator who remotely manipulates a construction machine, comprising: a server communicably connected to an orderer terminal which allows the operator to place an order for an operation to be executed by the construction machine by a remote manipulation, and communicably connected to a remote manipulating device for allowing the operator to remotely manipulate the construction machine. The server includes: an acquisition part which acquires actual work performance information about an actual work performance of the operator having remotely manipulated the construction machine by using the remote manipulating device, and acquires, at least during or after the operation, event information about an efficiency influencing event which is found to influence an efficiency of the operation in the operation of the construction machine by the remote manipulation by the operator; an actual work performance database which stores the actual work performance information; an event database which stores the event information; a skill level calculation part which calculates, based on evaluation information including the actual work performance information and the event information, a skill level of the operator for the remote manipulation; and a presentation part which presents the skill level to the orderer terminal.

In the skill evaluation system, the skill level is calculated in consideration of the efficiency influencing event as well as the actual work performance. In this configuration, the manipulation skill of the operator is fairly evaluated even in a case of an occurrence of an efficiency influencing event ungraspable by an orderer in advance of a start of an operation to be executed by the construction machine. The orderer thus can know the fairly evaluated skill level of the operator.

In the skill evaluation system, the acquisition part preferably further acquires operation schedule information sent from the orderer terminal and including workplan information about a plan for the operation of the construction machine. The evaluation information preferably further includes the workplan information.

In this aspect, the evaluation information further includes the workplan information. The skill level is thus calculated, based on the evaluation information including the operation plan information, the actual work performance information, and the event information. In other words, the skill level is calculated in consideration of the efficiency influencing event, and the calculation of the skill level is executable based on comparison between the workplan and the actual work performance in this aspect.

In the skill evaluation system, the workplan information preferably includes a prospective work time required to complete the operation of the construction machine and predetermined before the operator performs the remote manipulation. The actual work performance information preferably includes an actual work time in which the operation of the construction machine by the remote manipulation has been actually performed. The event information preferably includes information about an amount of increase or decrease in a work time increased or decreased due to the efficiency influencing event in the operation of the construction machine by the remote manipulation.

This aspect enables the calculation of the skill level based on a comparison between the prospective work time and the actual work time in further consideration of the amount of increase or decrease in the work time.

In the skill evaluation system, the workplan information preferably includes a prospective work quantity required to complete the operation of the construction machine and predetermined before the operator performs the remote manipulation. The actual work performance information preferably includes an actual work quantity which is an actual work quantity made/representing a work quantity actually made in the operation of the construction machine by the remote operation. The event information preferably includes information about an amount of increase or decrease in the work quantity increased or decreased due to the efficiency influencing event in the operation of the construction machine by the remote manipulation.

This aspect enables the calculation of the skill level based on a comparison between the prospective work quantity and the actual work quantity in further consideration of the amount of increase or decrease in the work quantity.

In the skill evaluation system, the workplan information preferably includes a prospective fuel consumption for the operation of the construction machine and predetermined before the operator performs the remote manipulation. The actual work performance information preferably includes an actual fuel consumption representing a fuel consumption actually made in the operation of the construction machine by the remote manipulation, The event information preferably includes information about an amount of increase or decrease in the fuel consumption increased or decreased due to the efficiency influencing event in the operation of the construction machine by the remote manipulation.

This aspect enables the calculation of the skill level based on a comparison between the prospective fuel consumption and the actual fuel consumption in further consideration of the amount of increase or decrease in the fuel consumption.

A skill evaluation method according to the embodiment is a method for evaluating a manipulation skill of an operator who manipulates a construction machine. The method is a skill evaluation method, in a server communicably connected to an orderer terminal which allows the operator to place an order for an operation to be executed by the construction machine by a remote manipulation, and communicably connected to a remote manipulating device for allowing the operator to remotely manipulate the construction machine. The skill evaluation method includes: acquiring actual work performance information about an actual work performance of the operator having remotely manipulated the construction machine by using the remote manipulating device; acquiring, at least during or after the operation of the construction machine, event information about an efficiency influencing event which is found to influence an efficiency of the operation in the operation of the construction machine by the remote manipulation by the operator; calculating, based on evaluation information including the actual work performance information and the event information, a skill level of the operator for the remote manipulation by a skill level calculation part included in the server; and presenting the skill level to the orderer terminal.

In the skill evaluation method, the skill level is calculated in consideration of the efficiency influencing event as well as the actual work performance. In this configuration, the manipulation skill of the operator is fairly evaluated even in a case of an occurrence of an efficiency influencing event ungraspable by an orderer in advance of a start of an operation to be executed by the construction machine. The orderer thus can know the fairly evaluated skill level of the operator.

## Claims

1. A skill evaluation system for evaluating a manipulation skill of an operator who remotely manipulates a construction machine, comprising:
a server communicably connected to an orderer terminal which allows the operator to place an order for an operation to be executed by the construction machine by a remote manipulation, and communicably connected to a remote manipulating device for allowing the operator to remotely manipulate the construction machine, wherein
the server includes:
an acquisition part which acquires actual work performance information about an actual work performance of the operator having remotely manipulated the construction machine by using the remote manipulating device, and acquires, at least during or after the operation, event information about an efficiency influencing event which is found to influence an efficiency of the operation in the operation of the construction machine by the remote manipulation by the operator;
an actual work performance database which stores the actual work performance information;
an event database which stores the event information;
a skill level calculation part which calculates, based on evaluation information including the actual work performance information and the event information, a skill level of the operator for the remote manipulation; and
a presentation part which presents the skill level to the orderer terminal.

2. The skill evaluation system according to claim 1, wherein
the acquisition part further acquires operation schedule information sent from the orderer terminal and including workplan information about a plan for the operation of the construction machine, and
the evaluation information further includes the workplan information.

3. The skill evaluation system according to claim 2, wherein
the workplan information includes a prospective work time required to complete the operation of the construction machine and predetermined before the operator performs the remote manipulation,
the actual work performance information includes an actual work time in which the operation of the construction machine by the remote manipulation has been actually performed,
and
the event information includes information about an amount of increase or decrease in a work time increased or decreased due to the efficiency influencing event in the operation of the construction machine by the remote manipulation.

4. The skill evaluation system according to claim 2 or 3, wherein
the workplan information includes a prospective work quantity required to complete the operation of the construction machine and predetermined before the operator performs the remote manipulation,
the actual work performance information includes an actual work quantity representing a work quantity actually made in the operation of the construction machine by the remote operation, and
the event information includes information about an amount of increase or decrease in the work quantity increased or decreased due to the efficiency influencing event in the operation of the construction machine by the remote manipulation.

5. The skill evaluation system according to any one of claims 2 to 4, wherein
the workplan information includes a prospective fuel consumption for the operation of the construction machine and predetermined before the operator performs the remote manipulation,
the actual work performance information includes an actual fuel consumption representing a fuel consumption actually made in the operation of the construction machine by the remote manipulation, and
the event information includes information about an amount of increase or decrease in the fuel consumption increased or decreased due to the efficiency influencing event in the operation of the construction machine by the remote manipulation.

6. A skill evaluation method for evaluating a manipulation skill of an operator who remotely manipulates a construction machine, in a server communicably connected to an orderer terminal which allows an orderer to place an order for an operation to be executed by the construction machine by a remote manipulation, and communicably connected to a remote manipulating device for allowing the operator to remotely manipulate the construction machine, the method comprising:
acquiring actual work performance information about an actual work performance of the operator having remotely manipulated the construction machine by using the remote manipulating device;
acquiring, at least during or after the operation, event information about an efficiency influencing event which is found to influence an efficiency of the operation in the operation of the construction machine by the remote manipulation by the operator;
calculating, based on evaluation information including the actual work performance information and the event information, a skill level of the operator for the remote manipulation by a skill level calculation part included in the server; and
presenting the skill level to the orderer terminal.
